# EUROPEAN PATENT SPECIFICATION

(11) **EP 0 661 861 B1**
(45) Date of publication and mention of the grant of the patent: **17.07.2002**
(21) Application number: 94309809.5
(22) Date of filing: 23.12.1994
(51) Int. Cl.: H04M 1/2745

(54) **A method for dialling a number in a radio telephone**
Verfahren zum Wählen einer Nummer in einem Funktelefon
Procédé de numérotation dans un radiotéléphone

(30) Priority: 31.12.1993 FI 935971
(43) Date of publication of application: 05.07.1995
(73) Proprietor: Nokia Corporation, 02150 Espoo (FI)
(72) Inventor: Peuhu, Arto, SF-33720 Tampere (FI)
(74) Representative: Haws, Helen Louise

(56) References cited:
- GB-A- 2 251 357
- US-A- 5 134 717
- US-A- 5 247 565
- US-A- 5 267 308

## Description

This invention relates to a method of dialling a telephone number, particularly for a radio telephone connected to a modem or similar device via a control bus.

Previously known radio telephones have means for storing telephone numbers in memory locations indexed by an alphanumeric code. A telephone number is then easily retrieved by entering the corresponding alphanumeric code into a user interface. When a telephone call is made using this method it is often referred to as abbreviated or speed dialling, and the memory location referred to as a abbreviated dialling memory location.

Known equipment exists to provide data communications using a radio telephone connected to a computer via a dedicated modem. Other microprocessor based devices such as personal organisers may equally be used instead of the computer. Typically the radio telephone is controlled by the dedicated modem via a control bus which transfers control data bidirectionally in serial form. The control bus for a radio telephone can be used for accessing a multitude of functions within the telephone from battery charging levels to switching on hands-free mode. Common control buses used in radio telephones include the M2BUS and the DBUS systems

Prior art reference GB-A-2251 357 discloses the concept of storing telephone numbers in an external device such as a notebook computer once the radiotelephone memory is full, and using the telephone numbers in the notebook memory to initiate a telephone call by retrieving the number from its memory and sending it to the transmitting unit of the radiotelephone.

When a telephone call is initiated from the computer the modem sends the complete dialled telephone number to the telephone one digit at a time in serial form via the control bus. In this situation each digit of the telephone number corresponds to more than one signal passing down the control bus. The drawback associated with this method is that the control bus may become overloaded with data, especially if several devices are accessing it simultaneously. Also telephone numbers stored in the telephone must first be copied manually to the computer instead of being accessed automatically.

Prior art reference US-A-5 134 717 discloses the use of external memory means such as a memory card to expand the internal memory of a radiotelephone. It discloses using abbreviated dialling codes to identify a particular memory location whether in the internal or external memories, and using these abbreviated dialling codes to transfer a telephone number from one memory location to another.

According to a first aspect of the invention there is provided a method for accessing a memory location within a memory (8) of a telephone (3) from an external device (1, 2) via a control bus (6), the method comprising the steps of transmitting data indicative of the memory location from the external device (1, 2) to the telephone (3) via the control bus (6); and accessing the memory location indicated by the transmitted data; characterised in that by means of transmitting data indicative of the memory location from the external device to the telephone, the external device is used to gain access to a telephone number stored in a memory location of the telephone in order to make a telephone call.

According to a second aspect of the invention there is provided an apparatus comprising an external device (1, 2) having means for transmitting data indicative of a memory location; a telephone (3) having means for accessing the memory location indicated by the transmitted data; and a control bus (6) for connecting the telephone (3) and the external device (1, 2); characterised in that by means of transmitting data indicative of the memory location from the external device to the telephone, the external device is used to gain access to a telephone number stored in a memory location of the telephone in order to make a telephone call.

The method and apparatus in accordance with the invention have the advantage of decreasing the flow of data through the control bus of the telephone, which can in turn accelerate the dialling of a telephone call. Also, by freeing communication time in the control bus, other external devices are allowed increased access to the multitude of functions within the telephone without the risk of overloading the control bus.

In a preferred embodiment the method is used to set up a telecommunication link. This has the advantage of allowing an external device to make a telephone call via the telephone without sending the complete telephone number to the telephone.

The method in accordance with the invention allows telephone numbers to be read from an abbreviated dialling memory of the telephone using a computer link.

The method in accordance with the invention also allows telephone numbers to be written to an abbreviated dialling memory of the radio telephone from a computer using a data communication program.

Suitably the control bus includes a serial type connection for sending and receiving data in serial form.

Suitably the telephone used is a radio telephone for implementation in a cellular network and the external device is a modem.

In a preferred embodiment the modem has additional means for connecting to a microprocessor based device. This has the advantage of allowing one computer to communicate with another remote computer using the modem and telephone connection.

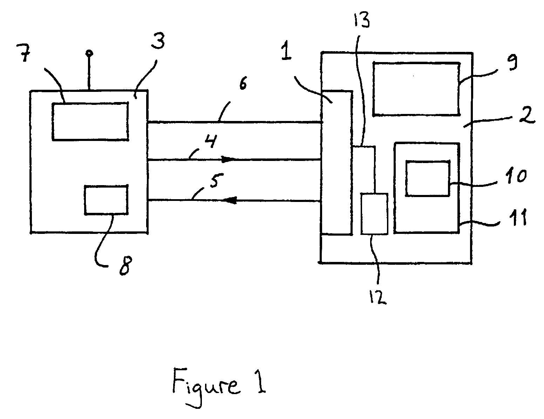

Embodiments of the invention will now be described, by way of example, with reference to the accompanying drawing, Figure 1, which shows a computer connected to a radio telephone by means of a modem.

With reference to Figure 1, a computer 2, or any other device including microprocessor based devices, is connected to a radio telephone 3 by means of a modem 1. The modem 1 and the radio telephone 3 are interconnected by two data transfer buses 4 and 5, and a control bus 6. The radio telephone 3 comprises among other components a keyboard 7 and an abbreviated dialling memory 8 which contains stored telephone numbers indexed by a alphanumeric code. Various ways exist for storing the telephone numbers in the abbreviated dialling memory using the keyboard 7. The abbreviated dialling memory 8 may be permanently fixed within the radio telephone or it may exist in a SIM (Subscriber Identity Module) card associated with the radio telephone 3. The computer 2 also comprises a keyboard 9, a microprocessor 12, a connection 13 between the keyboard 9 and microprocessor 12, and a data communication program 10 which is saved in an appropriate memory unit 11. The control bus 6 is connected to radio telephone 3, to allow peripheral devices such as the modem 1 to control the operations of the radio telephone.

The command interpreting software of modem 1 optionally supports the commands of the Hayes AT standard or the CCITT V25.bis standard. A few extended commands are also recognised by the modem 1 to support the additional functions relating to the invention. The commands are issued from the computer 2 by the data communication program 10 in response to some action such as a mouse operation, and are responsible for instructing the modem 1 to perform certain tasks. These tasks involve the modem sending and receiving data via the control bus 6 to control the radio telephone, for example, when connecting a telephone call. The embodiment of the invention will be further described with reference to the Hayes AT commands. It should be noted, however, that the tasks performed may also be achieved using other standard command sets such as the CCITT V25.bis standard.

A telephone number may be dialled directly from the computer 2 via the modem 1 by issuing the command ATD (D denotes Dialling) followed by the telephone number. Once the dialling command is issued the modem 1 opens the connection to the radio telephone 3 via the control bus 6 and dials the telephone number. After a telephone connection is made, the modem sends a suitable response signal back to the computer, such as "connect". If the telephone number is busy, the modem sends a suitable response, such as "busy". The responses given vary depending on the settings within the modem.

The saving of a telephone number in the abbreviated dialling memory 8 of the telephone 3 is achieved by the data communication program 10 sending one of the following optional extended commands to the modem 1:
1) AT&ZME28 = 9313165800,
2) AT&Z = 9313165800, or
3) AT&ZME"NOKIA = 9313165800.

The command AT&Z is one of the extended commands used by the modem to permit access to the abbreviated dialling memory 8 of radio telephone 3 via the control bus 6. In option 1, the telephone number 9313165800 is saved with the AT command in abbreviated dialling memory 8 of radio telephone 3, at memory location '28'. In option 2, the telephone number 9313165800 is saved with the AT command at the next free memory location available in abbreviated dialling memory 8. In option 3 the alphanumeric code 'NOKIA' and the telephone number 9313165800 are saved in abbreviated dialling memory 8 of radio telephone 3 at the next free memory location available. Confirmation of the next free memory location could be obtained from the radio telephone 3.

To initiate the dialling of a telephone number saved in abbreviated dialling memory 8 of radio telephone 3 the computer 2 optionally sends one of the following AT commands to the modem 1:
1) ATDS = ME28 ,
2) ATDS = ME0, or
3) ATDS = " NOKIA

The command ATDS is another command used by the modem to permit access to the abbreviated dialling memory 8 of radio telephone 3 via the control bus 6. In option 1 the AT command specifies that the telephone number to be dialled is found in memory location '28' of the abbreviated dialling memory 8. In option 2 the AT command specifies that the telephone number to be dialled is found in memory location '0', commonly used to store the last telephone number dialled, i.e. this telephone number is redialled. In option 3 the AT command specifies that the telephone number to be dialled is found in abbreviated dialling memory 8 at a memory location called 'NOKIA'. In command ATDS = " NOKIA, the sign " may be replaced with any suitable sign to identify that the following characters are an alphanumeric code. After sending the alphanumeric code to the radio telephone 3, the modem 1 may be configured to receive from the radio telephone 3 the telephone number corresponding to the alphanumeric code and relay this data to the computer 2.

The AT commands described above are extended commands in addition to the standard Hayes AT commands that comply with the industrial standard. Equivalent extended commands can be added to the command set of other data communication standards such as the CCITT V25.bis standard. An embodiment of the invention will now be described with reference to the CCITT V25.bis commands.

The saving of a telephone number in the abbreviated dialling memory 8 of the telephone 3 is achieved by the data communication program 10 sending one of the following optional extended commands to the modem 1:
1) CRN = *28*9313165800*,
2) CRN = 9313165800, or
3) CRN = NOKIA 9313165800.

In option 1, the telephone number 9313165800 is saved with the CRN command in abbreviated dialling memory 8 of radio telephone 3, at memory location '28'. In option 2, the telephone number 9313165800 is saved with the CRN command at the next free memory location available in abbreviated dialling memory 8. In option 3 the alphanumeric code 'NOKIA' and the telephone number 9313165800 are saved in abbreviated dialling memory 8 of radio telephone 3 at the next free memory location available. Confirmation of the next free memory location could be obtained from the radio telephone 3.

To initiate the dialling of a telephone number saved in abbreviated dialling memory 8 of radio telephone 3 the computer 2 optionally sends one of the following CRN commands to the modem 1:
1) CRN 28,
2) CRN ME0, or
3) CRN " NOKIA

In option 1 the CRN command specifies that the telephone number to be dialled is found in memory location '28' of the abbreviated dialling memory 8. In option 2 the CRN command specifies that the telephone number to be dialled is found in memory location '0', commonly used to store the last telephone number dialled, i.e. this telephone number is redialled. In option 3 the CRN command specifies that the telephone number to be dialled is found in abbreviated dialling memory 8 at a memory location called 'NOKIA'. In command CRN " NOKIA, the sign " may be replaced with any suitable sign to identify that the following characters are an alphanumeric code.

The telephone numbers stored in the abbreviated dialling memory 8 of radio telephone 3 represent useful data for use in the data communication software. Access to this information may be achieved using the modem 1 via the control bus 6. The telephone numbers and their corresponding memory locations, the alpha-numeric codes, can then be read by the modem 1 and the data relayed to the data communication software in the computer 2.

In view of the foregoing description it will be evident to a person skilled in the art that various modifications may be made within the scope of the invention. For example the specific embodiment refers to using a modem but any similar data communication device may equally be used in its place. It should also be noted that the term radio telephone includes digital as well as analogue sets.

## Claims

1. A method for accessing a memory location within a memory (8) of a telephone (3) from an external device (1, 2) via a control bus (6), the method comprising the steps of:
transmitting data indicative of the memory location from the external device (1, 2) to the telephone (3) via the control bus (6); and
accessing the memory location indicated by the transmitted data;
**characterised in that** by means of transmitting data indicative of the memory location from the external device to the telephone, the external device is used to gain access to a telephone number stored in a memory location of the telephone in order to make a telephone call.

2. A method according to claim 1 wherein a telephone number stored in the accessed memory location is used to set up a telecommunication link.

3. A method according to claim 1 wherein a telephone number stored in the accessed memory location is transmitted to the external device (1, 2).

4. A method according to claim 1 wherein data indicative of a telephone number is transmitted from the external device (1, 2) to the telephone (3) and stored in the accessed memory location.

5. A method according to any preceding claim wherein the memory location accessed is an abbreviated dialling memory location.

6. A method according to any preceding claim wherein the data indicative of the memory location is an alphanumeric code.

7. A method according to any preceding claim wherein the data indicative of the memory location is transmitted in serial form from the external device (1, 2) to the telephone (3).

8. An apparatus comprising:
an external device (1, 2) having means for transmitting data indicative of a memory location;
a telephone (3) having means for accessing the memory location indicated by the transmitted data; and
a control bus (6) for connecting the telephone (3) and the external device (1, 2);
**characterised in that** by means of transmitting data indicative of the memory location from the external device to the telephone, the external device is used to gain access to a telephone number stored in a memory location of the telephone in order to make a telephone call.

9. An apparatus as claimed in claim 8 wherein the telephone (3) is a radio telephone.

10. An apparatus as claimed in claims 8 or 9 wherein the control bus (6) comprises a serial type connector.

11. An apparatus as claimed in any one of claims 8 to 11 wherein the external device is a modem (1).

12. An apparatus as claimed in claim 11 wherein the modem (1) comprises additional means for connecting to a microprocessor based device (2).

## Patentansprüche

1. Verfahren zum Zugreifen auf einen Speicherort innerhalb eines Speichers (8) eines Telefons (3) von einer externen Vorrichtung (1, 2) über einen Steuerbus (6), mit den folgenden Schritten:
- Übertragen von den Speicherort anzeigenden Daten von der externen Vorrichtung (1, 2) über den Steuerbus (6) an das Telefon (3); und
- Zugreifen auf den durch die übertragenen Daten angezeigten Speicherort;
**dadurch gekennzeichnet, dass** die externe Vorrichtung durch Übertragen von den Speicherort anzeigenden Daten von der externen Vorrichtung an das Telefon dazu verwendet wird, Zugriff auf eine an einem Speicherort des Telefons gespeicherte Telefonnummer zu erlangen, um einen Telefonanruf zu tätigen.

2. Verfahren nach Anspruch 1, bei dem eine am Speicherort, auf den zugegriffen wird, gespeicherte Telefonnummer zum Aufbauen einer Telekommunikationsstrecke verwendet wird.

3. Verfahren nach Anspruch 1, bei dem eine am Speicherort, auf den zugegriffen wird, gespeicherte Telefonnummer an die externe Vorrichtung (1, 2) übertragen wird.

4. Verfahren nach Anspruch 1, bei dem eine Telefonnummer anzeigende Daten von der externen Vorrichtung (1, 2) an das Telefon (3) übertragen werden und am Speicherort, auf den zugegriffen wird, abgespeichert werden.

5. Verfahren nach einem der vorstehenden Ansprüche, bei dem der Speicherort, auf den zugegriffen wird, ein Kurzwahlspeicherort ist.

6. Verfahren nach einem der vorstehenden Ansprüche, bei dem die den Speicherort anzeigenden Daten einem alphanumerischen Code entsprechen.

7. Verfahren nach einem der vorstehenden Ansprüche, bei dem die den Speicherort anzeigenden Daten in serieller Form von der externen Vorrichtung (1, 2) an das Telefon (3) übertragen werden.

8. Vorrichtung mit:
- einer externen Vorrichtung (1, 2) mit einer Einrichtung zum Übertragen von einen Speicherort anzeigenden Daten;
- einem Telefon (3) mit einer Einrichtung zum Zugreifen auf den durch die übertragenen Daten angezeigten Speicherort; und
- einem Steuerbus (6) zum Verbinden des Telefons (3) und der externen Vorrichtung (1, 2);
**gekennzeichnet durch** eine Einrichtung zum Übertragen von den Speicherort anzeigenden Daten von der externen Vorrichtung an das Telefon, wobei die externe Vorrichtung dazu verwendet wird, Zugriff auf eine Telefonnummer zu erlangen, die an einem Speicherort des Telefons abgespeichert ist, um einen Telefonanruf zu tätigen.

9. Vorrichtung nach Anspruch 8, bei der das Telefon (3) ein Funktelefon ist.

10. Vorrichtung nach Anspruch 8 oder 9, bei der der Steuerbus (6) einen seriellen Verbinder aufweist.

11. Vorrichtung nach einem der Ansprüche 8 bis 11, bei der die externe Vorrichtung ein Modem (1) ist.

12. Vorrichtung nach Anspruch 11, bei der das Modem (1) eine zusätzliche Einrichtung für Verbindung mit einer Mikroprozessor-gestützten Vorrichtung (2) aufweist.

## Revendications

1. Procédé d'accès à un emplacement de mémoire dans une mémoire (8) d'un téléphone (3) à partir d'un dispositif extérieur (1, 2) par l'intermédiaire d'un bus de commande (6), le procédé comprenant les étapes consistant à :
transmettre les données indicatives de l'emplacement de mémoire du dispositif extérieur (1, 2) au téléphone (3) par l'intermédiaire du bus de commande (6) ; et
accéder à l'emplacement de mémoire indiqué par les données transmises ;
**caractérisé en ce qu'**au moyen des données transmises du dispositif extérieur au téléphone et indicatives de l'emplacement de mémoire, on utilise le dispositif extérieur pour obtenir l'accès à un numéro de téléphone mis en mémoire dans un emplacement de mémoire du téléphone afin de lancer un appel téléphonique.

2. Procédé selon la revendication 1, dans lequel un numéro de téléphone mis en mémoire dans l'emplacement de mémoire auquel on accède est utilisé pour établir une liaison de télécommunication.

3. Procédé selon la revendication 1, dans lequel un numéro de téléphone mis en mémoire dans l'emplacement de mémoire auquel on accède est transmis au dispositif extérieur (1, 2).

4. Procédé selon la revendication 1, dans lequel les données indicatives d'un numéro de téléphone sont transmises du dispositif extérieur (1, 2) au téléphone (3) et mises en mémoire dans l'emplacement de mémoire auquel on accède.

5. Procédé selon l'une quelconque des revendications précédentes, dans lequel l'emplacement de mémoire auquel on accède est un emplacement de mémoire de numérotation abrégée.

6. Procédé selon l'une quelconque des revendications précédentes, dans lequel les données indicatives de l'emplacement de mémoire sont un code alphanumérique.

7. Procédé selon l'une quelconque des revendications précédentes, dans lequel les données indicatives de l'emplacement de mémoire sont transmises en série du dispositif extérieur (1, 2) au téléphone (3).

8. Appareil comprenant :
un dispositif extérieur (1, 2) possédant un moyen de transmission de données indicatives d'un emplacement de mémoire ;
un téléphone (3) possédant un moyen d'accès à l'emplacement de mémoire indiqué par les données transmises ; et
un bus de commande (6) pour le raccordement du téléphone (3) au dispositif extérieur (1, 2) ;
**caractérisé en ce qu'**au moyen des données transmises du dispositif extérieur au téléphone et indicatives de l'emplacement de mémoire, on utilise le dispositif extérieur pour obtenir l'accès à un numéro de téléphone mis en mémoire dans un emplacement de mémoire du téléphone afin de lancer un appel téléphonique.

9. Appareil selon la revendication 8, dans lequel le téléphone (3) est un radiotéléphone.

10. Appareil selon les revendications 8 ou 9, dans lequel le bus de commande (6) comprend un connecteur de type série.

11. Appareil selon l'une quelconque des revendications 8 à 10, dans lequel le dispositif extérieur est un modem (1).

12. Appareil selon la revendication 11, dans lequel le modem (1) comprend un moyen additionnel pour le raccordement à un dispositif (2) à base de microprocesseur.
